(19) Europäisches Patentamt
European Patent Office
Office européen des brevets

(11) EP 2 799 307 A1

(12) **EUROPEAN PATENT APPLICATION**
published in accordance with Art. 153(4) EPC

(43) Date of publication:
**05.11.2014 Bulletin 2014/45**

(21) Application number: **12863323.7**

(22) Date of filing: **20.12.2012**

(51) Int Cl.:
***B61L 27/00*** *(2006.01)* ***B60L 11/18*** *(2006.01)*
***B60L 15/20*** *(2006.01)* ***B60M 3/00*** *(2006.01)*

(86) International application number:
**PCT/JP2012/008163**

(87) International publication number:
**WO 2013/099171 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2011 JP 2011284138**

(71) Applicant: **Kabushiki Kaisha Toshiba**
**Minato-ku**
**Tokyo 105-8001 (JP)**

(72) Inventors:
- **MIYOSHI, Miyako (JP)**
- **TANOMURA, Kenichi (JP)**
- **OTSUKI, Midori (JP)**
- **OSAKI, Yoshiro (JP)**
- **NIWA, Yoshimitsu (JP)**
- **NOGI, Masayuki (JP)**
- **LEE, Kyungsoo (JP)**
- **IDEMORI, Kimito (JP)**
- **AKASHI, Masakuni (JP)**
- **YUGE, Akio (JP)**
- **MUGIYA, Yasuyoshi (JP)**
- **OOTSUJI, Koji (JP)**

(74) Representative: **Ekstedt, Måns**
**Awapatent AB**
**P.O. Box 11394**
**404 28 Göteborg (SE)**

(54) **TRANSPORTATION MANAGEMENT DEVICE, TRANSPORTATION MANAGEMENT SYSTEM, AND CONTROL PROGRAM**

(57) Transportation management means of a transportation management apparatus according to an embodiment performs service management of a plurality of trains constituting a train group, based on a preset train diagram and a preset total power consumption amount, following the train diagram, in such a way that the actual total power consumption amount accompanying operation of the plurality of trains is kept within the set total power consumption amount.

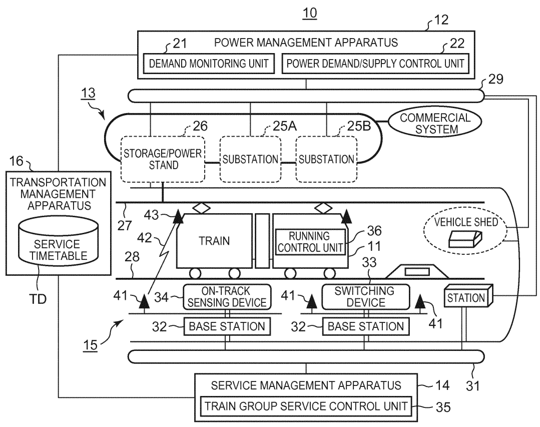


FIG. 1

EP 2 799 307 A1

## Description

### FIELD

The present embodiment relates to transportation management apparatus, a transportation management system, and control program.

### BACKGROUND

Rail vehicles may comprise for example arrangements in which the running energy is generated based on electricity; arrangements in which power is mechanically generated based on fuel; or arrangements in which electric power for running is generated by power generating system installed in the rail vehicle.

Typically, in the power systems of electric railways or new transit systems, power supplied from a commercial power source is converted to power for supply to the rail vehicles at a substation. The train (vehicle) of the railway/new transit system then runs, using the power supplied from the substation through a feeder system as its power source.

In a train operation, a railway traffic control system controls train routes based on a preset train diagram. In this process, in modern railway systems, power is supplied in such a way that the train service is not delayed. For example when the train diagram is augmented, efforts may be made to achieve stable transportation by increasing the number of substation installations and providing additional power supply apparatus in locations where voltage drop is liable to occur in the feeder system (see for example Patent Reference 1 to Patent Reference 3) .

### PRIOR ART REFERENCES

[Patent Reference 1] Issued Japanese Patent Number 3607045
[Patent Reference 2] Laid-open Japanese Patent Application 2010-011711
[Patent Reference 3] US Patent Number 7397149

However, in actual train operation, power is employed in the amount required by the trains, within a capacity of the power supply system, and the train operation is performed without taking any particular regard to the total power consumption.

Consequently, albeit the stability of transportation is guaranteed, the total power consumption (total amount of energy) is not necessarily suppressed i.e. there is some scope for energy-saving.

Also, in for example restarting of operation after an incident, if instructions are erroneously given to operate the trains in a manner exceeding the power supply capability, there is a risk that the substations would become incapable of supplying power or that recovery of the delay would be protracted.

### BRIEF DESCRIPTION OF THE DRAWINGS

Fig. 1 shows an exemplary railway system according to an embodiment;
Fig. 2 is a functional block diagram of a railway system according to a first embodiment;
Fig. 3 is a functional diagram of transportation management apparatus;
Fig. 4 is a functional diagram of a service control unit for a group of trains;
Fig. 5 is a process flowchart of running control processing;
Fig. 6 is a diagram of service control of a group of trains;
Fig. 7 is a diagram of the breakdown (mechanism) of energy consumption in a train;
Fig. 8 is a diagram of a calculation process in service control of a group of trains;
Fig. 9 is a functional block diagram of an electric railway system according to a second embodiment;
Fig. 10 is a functional block diagram of an electric railway system according to a third embodiment;
Fig. 11 is a functional block diagram of an electric railway system according to a fourth embodiment.

### DETAILED DESCRIPTION

Transportation management means of transportation management apparatus according to the embodiment performs train operation for a plurality of trains constituting a group of trains in such a way that, while the plurality of trains are operated in accordance with a train diagram, the actual total power consumption is kept within a preset total power consumption, based on a preset train diagram and a preset total power consumption.

The present embodiment was made in view of the above, and can provide transportation management apparatus, a transportation management system and a control program whereby stable train operation can be performed taking into account total power consumption, when supplying power to the trains and managing train operation in accordance with a train diagram.

This embodiment is described below with reference to the drawings.

First embodiment

[1] Fig. 1 shows an exemplary railway system according to an embodiment.

An railway system 10 comprises: power management apparatus 12 that manages the power that is supplied to various trains 11 constituting a group of trains (in the case for example of a new transit system or the like, these might be called vehicles, but for the present they will be termed trains.); a railway power supply system 13 that supplies power to trains 11 under the management of the power management apparatus 12; service management apparatus 14 that carries out service management of the trains 11; a service management system 15 that performs on-track position detection of trains 11 and switching control of the track, under the management of the service management apparatus 14; and a transportation management apparatus 16 that performs transportation management, by causing the power management apparatus 12 and the service management apparatus 14 to operate in a cooperative fashion. In this case, the concept of a train 11 is intended to include independently running vehicles (for example electric locomotives and trains) and bus rapid transit (BRT) or the like new transit systems.

The power management apparatus 12 comprises a demand monitoring unit 21 that monitors power demand from the transportation management apparatus 16 and a power demand/supply control unit 22 that performs control of power supply and demand.

The railway power supply system 13 receives power from an external power source and supplies it to the trains 11. For this purpose, substations 25A and 25B and a storage/power stand 26 are provided and power is supplied with respect to the trains 11 through a trolley wire and track (rail track) 28.

A power converter (power conversion means) for converting the power from the power source to power for running the rail vehicles is therefore often installed in the substations 25A, 25B. It is also possible to provide an accumulator or electrical accumulator (storage means) and a charging/discharging controller (charging/discharging control means) whereby power is stored in this accumulator or power is discharged therefrom.

Also, the storage/power stand 26 may be provided with an accumulator (storage means) instead of the power converters in the substations 25A, 25B.

In this case, the power management apparatus 12 and the railway power supply system 13 are connected through a communication network 29.

As the power source that supplies power to the railway power supply system 13, apart from employing a commercial system, it would be possible to construct a micro-grid using natural energy such as sunlight or wind power, or to arrange to receive power from an external micro-grid. In such cases, a monitoring and control device is provided for the micro-grid.

The service management apparatus 14 is usually provided in a ground service management center, not shown. The service management apparatus 14 comprises a train group service control unit 35 that controls a group of trains constituted by a plurality of trains 11. The service management apparatus 14 is connected with the service management system 15 through a communication network 31 and controls a plurality of base stations 32 constituting the service management system 15.

The service management system 15 comprises a plurality of base stations 32 and switching devices 33 and on-track sensing devices 34 connected with the base stations 32.

The switching devices 33 perform switching control at switches (branching points) of the track constituting the running track of the trains 11.

The on-track sensing devices 34 detect the presence of a train 11 within prescribed track ranges.

Also, the service management apparatus 14 gives instructions, through the communication network 31, to the base stations 32 corresponding to switching devices 33, for the control of the corresponding switching devices 33. A running track is thereby constituted with the base stations 32 controlling the corresponding switching devices 33.

The service management apparatus 14 acquires information as to the track unit on which the train is located that is sensed by the on-track sensing devices 34, through the base stations 32, and performs running control of the trains 11, to which power is supplied from the railway power supply system 13 by transmitting control signals to the trains 11 through a ground transmission device 41, a wireless communication network 42 and an onboard transmission device 43.

Fig. 2 is a functional block diagram of a railway system according to a first embodiment.

In general terms, the railway system 10 realizes a transportation management function unit F1, a power demand/supply control function unit F2, a power supply function unit F3, a train on-track position detection function unit F4, a train group service control function unit F5, a ground-onboard transmission function unit F6, and a train running control function unit F7.

The transportation management function unit F1 manages the power supply and train service in a cooperative fashion by creating a power demand/supply plan based on the set total power consumption and the train diagram TD. In this way, the amount of power furnished is in accordance with a preset total rate of consumption and power supply and train operation are conducted in a cooperative fashion by controlling the train operation within the preset allowed range of the train diagram.

The total power consumption is preset as the necessary amount of power, taking into account for example the drive characteristics of the vehicles used in relation to the transportation demand and the characteristics of the auxiliary apparatus and loss in the power supply system. Also, the total power consumption may for example be set as a value corresponding to the contracted amount of power per day determined by the power company and the railway/new transit operator. It is also possible to set this in terms of amount of power per unit time, or to vary the set value beforehand depending on the time zone, or to alter the set value at an arbitrary time-point.

Also, instead of the power amount, a power value could be set.

Furthermore it may be arranged to set a regulated value when there is a demand/response request from a smart grid.

It should be noted that it is also possible to set a value of ample magnitude, in cases where there is no need to reduce the total power consumption.

The power demand/supply control function unit F2 controls the power supply apparatus in for example the substations in accordance with the power demand/supply plan, by controlling power supply by adjusting the output etc of apparatus that implements the power supply function, namely, converters or accumulation devices of the substations, or generators using natural energy.

The power supply function unit F3 is realized as the converters or accumulation devices of the substations and/or generators using natural energy such as solar power (solar energy generating system) or wind power (wind energy generating system), and supplies power to the trains 11.

The train on-track position detection function unit F4 measures the train position on the ground. For example, this can be implemented using a track circuit.

The train group service control function unit F5 controls the operation of a group of trains by transmitting instructions to the train running control function unit F7, which is implemented on the trains 11 using a ground-onboard transmission function unit F6, to be described.

The ground-onboard transmission function unit F6 is realized by a ground transmission device 41, wireless communication network 42 and onboard transmission device 43, and forwards instructions that are transmitted from the train group service control function unit F5 to the train running control function unit F7.

The train running control function unit F7 automatically controls running of the train in which the function unit F7 is installed, in accordance with instructions transmitted by the train group service control function unit F5. It is also possible for this to be constituted using a train running support function instead of the train running control function unit F7. In this case, the train driver of the train 11 controls running of the train by performing the driving operation while receiving support for running based on the running support information provided by the train running support function. It should be noted that in present-day railway/new transit systems, power is supplied in accordance with the requirements of the trains 11 and there is usually no operating terminal to exercise control in order to perform power control. In this case, control on the side of the power supply system is not performed, so there is need to perform control of the power consumption amount by controlling operation of the trains 11 and hence the group of trains.

Next, an outline of the operation of the first embodiment will be described.

First of all, the operation of the transportation management apparatus 16 will be described.

Fig. 3 is a functional diagram of a transportation management device.

First of all, the operation of the preceding day will be described.

The transportation management apparatus 16 elaborates a power demand/supply plan for daily transportation on the preceding day.

The transportation management apparatus 16 elaborates a power demand/supply plan, inputting the train running plan based on the train diagram TD which was provided beforehand, the power generation forecast results of the natural energy power sources, the power demand prediction results of the ancillary apparatus of the stations and the like, and the total power consumption set value specified by the operator.

The transportation management apparatus 16 for example calculates (step S11) the train running plan in terms of the amount of power (electrical energy) in 30-minute units, constituting the transportation demand, based on the train diagram TD for the following day, which was given beforehand.

Also, the transportation management apparatus 16 performs a similarity search from past result data, based on the weather prediction results of the following day (= input of weather forecast information), and predicts the amount of power generated by the natural energy power source in terms of the amount of power in 30-minute units, that is appropriate to the weather prediction results of the following day.

Furthermore, the transportation management apparatus 16 predicts (step S13) the power demand of auxiliary installations such as stations in terms of the amount of power in 30-minute units, using information regarding events in the vicinity, which it receives as input.

Next, taking into account the predicted transportation demand, power generation amount and power demand, the transportation management apparatus 16 determines (step S14) the method of charging/discharging control of the accumulation devices and parameters such as the delivery voltage of the various substations.

Next operation on the current day will be described.

On the current day, the transportation management apparatus 16 commences operation with the power demand/supply plan values that were set on the previous day.

The transportation management apparatus 16 then performs train group operation control (step S21), in accordance with the actual power generation information and/or power demand/supply information and train running information. In accordance with this control, the train running control unit of the various trains 11 then performs running control (step S22) of the respective corresponding train 11.

The transportation management apparatus revises the power demand/supply plan as required (step S23), in accordance with the result of the train group service control. Also, it performs power demand/supply control computation based on the power demand/supply plan and power demand/supply control (step S24) by creating instruction values, such as for example the number of converters to be operated, for demand/supply control in the various substations and transmitting these instruction values to the various substations.

Also, the transportation management apparatus 16 performs power demand/supply control by acquiring power generation information (step S25) corresponding to the amounts of power provided by the natural energy power sources. In addition, the transportation management apparatus 16 also reports the power demand/supply control particulars, for example on entering a restricted-power control mode, to the train group service control unit.

The train group service control unit 35 of the service management apparatus 14 will now be described.

Fig. 4 is a functional diagram of the train group service control unit.

The train group service control unit 35 comprises a train running control unit 35A that performs running control of the trains 11 and a train tracking unit 35B that is used to obtain a picture of the running condition (running history) of the trains 11.

The train running control unit 35A inputs train diagram TD and power demand/supply plan information from the transportation management apparatus 16 and inputs running history information including train track position information from the train tracking unit 35B.

Also, the train running control unit 35A outputs arrival position target information and speed restriction information constituting control instructions to the running control unit 36 that is mounted in each train 11, in respect of every train 11. It should be noted that speed target information or acceleration/deceleration target information could also be used as control instructions.

The arrival position target information that is supplied to the running control unit of each train 11 is basically set as the planned values of the running trajectory of the train 11 when the train diagram TD is decided upon. In this case, transportation cannot necessarily always be carried out in accordance with the plan, due to various factors such as delays caused by boarding/alighting of passengers at the stations, the effect of feeder voltage drop and lowering of the acceleration when the passenger occupancy rate is high, so in order to cope with this a time margin is provided in the train diagram TD.

Accordingly, this embodiment aims at reducing the power consumption by utilizing this time margin.

Specifically, the speed of the train 11 and/or its rate of acceleration/deceleration are lowered, or rise in operating speed is suppressed by shortening the stationary time at stations, in an allowed range in which the train 11 can be regarded as operating in accordance with the train diagram TD.

Specifically, by the "allowed range in which the train 11 can be regarded as operating in accordance with the train diagram TD" is meant, for example in the case where the train arrival time at a given station is specified as "15:13", that the train is allowed to arrive in a time zone from 15:13:0 to 15:13:59: in other words, the train may be allowed to arrive in the 15.13 band.

It should be noted that it is still necessary to eliminate delay when the plan is actually subjected to delay: in this event also, rather than immediately eliminating the delay, the delay may for example be gradually eliminated; in this way, unnecessary increase in the amount of energy consumption can be prevented.

Next, running control processing of the train will be described.

Fig. 5 is a processing flowchart of running control processing.

Control of running of a group of trains is performed by the following procedure, in accordance with the flow of the train service.

First of all, under the control of the transportation management apparatus 16, prior to commencement of service, the service management apparatus 14 sets the target arrival time-point and the target departure time-point to the same time-point (step S31), in accordance with the timetabled arrival time-point and the timetabled departure time-point of the train diagram TD. The timetabled arrival time-point and the timetabled departure time-point are displayed to customers as the train diagram TD.

Next, by checking the running schedule at the station arrival time (in the case of the departure station, prior to departure) of each train 11 from the station in question to the next station for each of the trains, the service management apparatus 14 determines (step S32) the scheduled departure time-point and the target arrival time-point at the next station. The running schedule as referred to herein means the planned values of the running trajectory of the train based on the train diagram.

Next, the service management apparatus 14 calculates the train position in accordance with each time-point step (=corresponding to the confirmation timings of the controlled condition of the train) , in accordance with the running schedule that was set up in step S32, and adopts these as the arrival position target values of the train with respect to each time-point step. Also, the service management apparatus 14 stores (step S33) as pair information relating to the calculated train speed and driver operations such as throttle setting ("notch" setting). The timing with which transmissions are effected to the train 11 may be specified for example as prior to departure from the station, but it could be arranged to perform transmissions with a period of equal intervals. The service management apparatus 14 then ascertains the offset with respect to the arrival position target value in each time-point step: if the offset is greater than a set value, the service management apparatus re-plans the running schedule (step S34).

In the aforementioned running control processing, apart from hardware constraints such as track conditions such as gradient and radius of curvature, the drive performance of the vehicles, the capacity of the feeder electrical system, constraints relating to the train running include: constraints imposed by the train diagram TD; constraints for maintenance and safe running; constraints relating to energy consumption; and constraints relating to maintenance of passenger comfort. Passengers also represent an external perturbation.

Further, the running condition of the trains is tracked by track sensing devices detecting the actual track position of the trains, and this is fed back to the train running control unit (step S35).

Next, service control of a group of trains will be described in detail.

Fig. 6 is a diagram of service control of a group of trains.

In Fig. 6, to simplify the description, it will be assumed that there are four stations ST1 to ST4 along the track and the only trains running are a train 11A and a train 11B. In addition, it will be assumed that the train 11A and the train 11B run from the station ST1 via the stations ST2 and ST3 towards the station ST4. In Fig. 6, an operational graph is shown on the left-hand side of the Figure and the running schedule is shown on the right-hand side.

In this running schedule, as shown from the middle area to the right-hand area of Fig. 6, the vertical axis indicates position and the horizontal axis indicates time.

In the running schedule, the Δ symbols indicate the station arrival times; from the standpoint of a transportation service, early arrivals are tolerable but running control should be exercised so as to prevent late arrivals.

Also, the O symbols indicate the station departure times; from the standpoint of a transportation service, late departures are tolerable but early departures should not occur. The times corresponding to these O symbols are presented to passengers in units of minutes (discarding the seconds units) as a so-called departures display board; since passengers often base their actions on these departure times, it is desirable that there should be no alterations to the planned values.

Furthermore, this running schedule is originally based on the train diagram, but is determined taking into consideration track conditions, vehicle performance, electrical feeder system conditions, signaling safety system conditions, delay recovery margins and the like; running the train group without departing therefrom contributes to stability of transportation.

The changes of speed between the stations are indicated together with time on the operational graph shown in the left-hand area of Fig. 6.

Consequently, in the normal operating condition, if fluctuations in the numbers of passengers etc are not taken into account, operation of the group of trains can be performed in accordance with the running schedule, if operation of the trains 11 is performed in accordance with the operational graph.

Next, the relationship between the energy consumption by the trains and running control of the trains will be described.

Fig. 7 is a diagrammatic breakdown (explanatory diagram) of energy consumption by the trains.

In a typical example of implementation of an operational graph shown in Fig. 7, as shown in Fig. 7 (a), the speed is raised with high accelerating force up to the maximum speed at the departure time at the station ST1, in the period from the time-point t1 to the time-point t2.

1 After this, in the time from the time-point t2 to the time-point t3, coasting is performed and the brake is actuated from the time-point t3 so as to stop the train precisely at the stopping position of the station ST2.

In recent years, however, as shown in Fig. 7(b), the number of vehicles in which regenerated power is generated when a braking action is performed has increased. In this way, the amount of energy consumed in running is determined together with the time requirement for running between stations in a relationship with the distance between stations and the acceleration/deceleration and/or maximum speed and coasting time etc.

Consequently, since repeated starting and stopping is associated with increases in the amount of energy consumption and arrival time, the train group service control unit, and hence the train running control unit, exercise control such that the running position of each train tracks the target train running location in real time.

Fig. 8 shows a diagram of the calculation steps in train group service control.

Operation at the time-point identified as the "current time-point" is described below.

It will be assumed that some discrepancy has been generated with regard to the time-point that was set by the scheduled departure time at the station ST2 and the target arrival time at the station ST3, in relation to the target position arrived at.

If this happens, the train group running schedule will be altered in order to eliminate this discrepancy.

The method for determining the running schedule of the trains 11 in this case is described below.

The train group service control unit determines the running schedule that is supplied to each train 11 in such a way that the following evaluation function (estimation function) J of the total delay time inferred value TDL and the train required energy TE that is necessary to operate the trains 11 is a minimum under the restrictive conditions explained below.

$$J=k_1 \cdot TDL+k_2 \cdot \Sigma TE$$

where $k_1$ and $k_2$ are weighting functions.

The total delay time inferred value TDL is calculated for example by the following expression.

$$TDL= \Sigma_{i=1,I}\Sigma_{n=1,N} (\text{arrival target time-point (station STn, train i)} - \text{timetabled arrival time-point (station STn, train i)})$$

The train required energy TE is calculated by for example the following expression, using the required energy SIE between the stations, where the station interval m and the train i are parameters.

$$\text{Train required energy } TE= \Sigma_{i=1,I}\Sigma_{m=1,M} (SIE(\text{station interval m, train i}))$$

In this case, calculation of the between-stations energy requirement SIE at times that have already past is achieved by inference, referring to the planned operational graph, using information as to the time-point and position of the train. Predicted values of the between-stations energy requirement in the future are calculated by updating the running schedule in accordance with for example vehicle performance and track conditions. Calculation of the between-stations energy requirement SIE also takes account of the energy consumed during stopping at the stations, such as for illumination, opening/closing of doors, and operation of the air conditioning apparatus.

These values can also be employed in information exchange with the trains when transmitting the train speed.

Regarding past power consumption results, the amounts that are taken into consideration can be adjusted by multiplying by a forgetting factor.

As restrictive conditions, the following may be mentioned.

(1) Restrictions imposed by the train diagram

$$\text{Target arrival time-point (station STn, train i)} \leqq \text{timetabled arrival time-point (station STn, train i)} + t_{ka}$$

$$\text{Target departure time-point (station STn, train i)} \geqq \text{timetabled departure time-point (station STn, train i)} + t_{kd}$$

where $t_{ka}$ and $t_{kd}$ are adjustment constants.

Delay can be permitted by suitable selection of these adjustment constants $t_{ka}$ and $t_{kd}$.

(2) Restrictions for maintaining safe running

(2.1) Restrictions in regard to the interval control between the trains

The following restriction applies in regard to the down line, in regard to each of the trains.

$$\text{Predicted value of train position (following train, } t+\Delta t) \leqq \text{train position (leading train, t) - safety distance (following train, t)}$$

where t represents the time-point [seconds] and t+Δt represents the time-point Δt seconds later than the time-point t (the same representation is used hereinafter).

The safety distance is specified as follows.

$$\text{Safety distance = stopping distance + positional margin distance + position detection error}$$

The stopping distance is defined as the distance required for the train to become stationary, from the current speed of the train in question. It should be noted that, instead of the distance required for the train to become stationary, from the current speed of the train, it would be possible to employ the result obtained by subtracting the stopping distance of the following train from the stopping distance of the leading train.

The same applies to the up line (inbound line).

(2.2) Restriction in regard to control to prevent overrunning of the limiting stop position

$$\text{Predicted value of train position (train i,} t+\Delta t) \leqq \text{limiting stopping position - safety distance (train i,t)}$$

(2.3) Restriction in regard to speed control

$$\text{Predicted value of train speed (train i,t+}\Delta\text{t)} \leqq \text{train speed limit (train i,t+}\Delta\text{t)}$$

The train speed limit of the train i at the time-point t+Δt is as follows and is calculated separately for each running track, such as the up line (inbound line) and down line (outbound line).

$$\text{Train speed limit (train i,t+}\Delta\text{t) = speed limit (train position (train i,t+}\Delta\text{t))}$$

(3) Restriction in regard to energy consumption

The target values in regard to energy consumption of each of the trains are determined by the power demand/supply plan. The target values of the energy consumption of each train are calculated as the amount of power obtained in a computer simulation of train running in accordance with the train diagram, assuming for example that the voltage at the pantograph point is a value (for example 1500V, or 1350V) that is set in accordance with the vehicle running performance specification and that the occupancy rate is 100%. In order to perform control such that discrepancy with respect to these target values of energy consumption is minimized, the allowed value of the control discrepancy is identified as Ek and the following restrictions are applied.

$$\text{Predicted value of energy requirement (train i,t+}\Delta\text{t)} \leqq \text{planned value of energy requirement (train i,t+}\Delta\text{t)+Ek}$$

$$\Sigma_{i=1,I}\ \text{predicted values of energy requirement (train i,t+}\Delta\text{t)} \leqq \text{planned value of total energy requirement (t+}\Delta\text{t)}$$

Regarding the energy consumption, this can be matched with target values for the energy consumption from moment to moment or can be kept below the calculated value of the final cumulative total.

(4) Restrictions regarding passenger comfort

For evaluation of passenger comfort, absolute values of the acceleration/deceleration in the direction of forward movement of the train are employed.

$$|\text{Train acceleration or deceleration (train i,t+}\Delta\text{t)}| \leqq \text{passenger comfort allowed value constant (train i)}$$

Also, instead of the absolute value of the acceleration/deceleration, the absolute value of the differential of the acceleration/deceleration may be employed.

$$|\text{Differential of train acceleration/deceleration (train } i, t+\Delta t)| \leqq \text{passenger comfort allowed value constant with respect to jerking (train } i)$$

The target arrival positions and speed limit information or service operating data etc that are applied to each train are formalized by the evaluation functions and restrictive conditions described above and can be determined by the methods of solution of optimization problems that are generally employed. Also, rather than optimization calculation, solutions can be obtained by logic. The calculations may be determined in conformity with the characteristic features of the railway/new transit system in question, by for example a method in which the calculation is performed with a fixed period of for example 100ms, or a method involving specifying the method of running to the next station on every departure from the station.

In this way, the total power consumption amount (set value of power used) for the train service is set and a power demand/supply plan is effected based on the train diagram TD, in such a way that this total power consumption amount (set value of power used) is not exceeded: thus train operation can be performed in a condition in which the total power consumption amount is managed by performing control taking into consideration both power and the train service, in accordance with the power demand/supply plan.

Consequently, in this first embodiment, energy-saving train operation can be performed by setting the total power consumption amount in accordance with energy-saving.

Also, a railway/new transit system can cope with alterations in the aforementioned set value of power use, even in cases where demands for cutting the amount of power consumption are imposed.

Also, in the above description, in the calculation of the train running energy in a railway/new transit system, it was assumed that the total required power for running the trains 11 = total power consumption amount. This is merely one example, and, in an electric railway using an overhead wire or third rail or the like, losses originating from the feeder power system are also generated. Consequently, power consumption in accordance with future running can also be inferred by computer simulation using a train power consumption or regenerated power inference model or electrical feeder system model, and this can be employed as one evaluation index.

[2] Second embodiment

Fig. 9 is a functional block diagram of an electric railway system according to a second embodiment.

In Fig. 9, parts that are identical with Fig. 2 are given the same reference symbols and the detailed description thereof is adopted.

The aspect in which the electric railway system 10A of Fig. 9 differs from the electric railway system 10 of Fig. 2 consists in that, instead of the train track position detection function unit F4 that detects the track position of a train on the ground, there is provided an onboard train position detection function unit F8 that detects the position of the train 11 in which it is installed and reports this position to a train group service control function unit F5 through a ground/onboard transmission function unit F6.

A speed generator installed on the vehicle or a GPS positioning device or the like may be employed as the onboard train position detection function unit F8. In this case, the ground/onboard transmission function unit F6 needs to be capable of two-way communication.

With this second embodiment, the train position can be determined to the nearest meter and at low cost, making possible even more precise train service control. A ground track sensing device 34 becomes unnecessary, so further savings in the cost of construction of the system can be realized.

[3] Third embodiment

Fig. 10 is a functional block diagram of an electric railway system according to the third embodiment.

In Fig. 10, parts that are identical with Fig. 2 are given the same reference symbols and the detailed description thereof is adopted.

The aspect in which the electric railway system 10B of Fig. 10 differs from the electric railway system 10 of Fig.

2 consists in that a used power amount detection function unit F9 is provided on the train 11.

With the third embodiment, the energy consumed by the train 11 itself can be constantly measured in the interior of the train, so measures directed at reducing energy consumption (for example energy-saving control of air conditioning or illumination) can easily be added in the form of a closed system within the train 11.

[4] Fourth embodiment

Fig. 11 is a functional block diagram of an electric railway system according to the fourth embodiment.

In Fig. 11, parts that are identical with Fig. 2 are given the same reference symbols and the detailed description thereof is adopted.

The aspect in which the electric railway system 10C of Fig. 11 differs from the electric railway system 10 of Fig. 2 consists in that a power generation control function unit F10 is provided.

This power generation control function unit F10 has the function of predicting the amount of power generated in order to effectively utilize the generated power, in the case of a railway/new transit system having power generation apparatus (power generating means) utilizing natural energy, such as a solar power generation device (photovoltaic device) or wind power generation device, not shown.

With this fourth embodiment, energy-saving of the train service can be achieved by setting the total power consumption amount in accordance with energy-saving, in the same way as in the first embodiment, even for routes where such power generation devices (power generating means) have been introduced: thus the beneficial effect can be obtained of being able to cope with demands for cutting the amount of power consumed, by altering the preset total amount of power consumed.

[5] Beneficial effect of the embodiments

With the embodiments described above, energy-saving of the train service can be achieved by setting the total power consumption amount in accordance with energy-saving.

Also, demands to cut the amount of energy consumption of the electric railway system can be coped with, by altering the total preset energy consumption amount.

[6] Modifications of the embodiments

Although, in the above description, the transportation management apparatus, the power management apparatus and the service management apparatus were constituted as separate apparatuses, it would be possible to employ as a unified apparatus any of: an apparatus combining the function of two apparatuses, namely, the transportation management apparatus and power management apparatus; an apparatus combining the function of two apparatuses, namely, the transportation management apparatus and the service management apparatus; or an apparatus combining the function of the three apparatuses.

In the above description, a construction was adopted in which the service control under the train diagram was such that the running speeds of the trains could be altered within a time range wherein the arrival time-points and departure time-points specified by the train diagram are unchanged: however, a construction could also be adopted in which the running speeds of the trains can be altered within a time range wherein the times specified by the train diagram are allowed to vary in a range permitting a certain margin.

In the above description, the construction of the service management apparatus 16, power management apparatus 12 and service management apparatus 14 was not described in detail, but these apparatuses may be constituted by hardware utilizing ordinary computers comprising a control device such as a CPU, storage devices such as ROM (Read Only Memory) and RAM (Random Access Memory), external storage devices such as HDDs and CD drives, display devices such as displays, and input devices such as keyboards or mice.

Also, the control program that is executed by the transportation management apparatus of the above embodiments may be provided in the form of installable or executable files recorded on computer-readable recording media such as a CD-ROM, flexible disk (FD), CD-R, or DVD (Digital Versatile Disk).

Also, it would be possible for the control programs executed by the transportation management apparatuses of the various embodiments described above to be provided by storing on a computer connected with a network such as the Internet and being downloaded via the network. Also, it would be possible to adopt an arrangement in which the control programs executed by the transportation management apparatuses of the various embodiments described above are provided or distributed via a network such as the Internet. Also, it would be possible to adopt an arrangement in which the control programs executed by the transportation management apparatuses of the various embodiments described above are provided by being incorporated beforehand in for example ROM.

While various embodiments of the present invention have been described, these embodiments are presented merely by way of example and are not intended to restrict the scope of the invention. Novel embodiments could be implemented in various other modes by various deletions, substitutions or alterations without departing from the gist of the invention. Such embodiments and modifications thereof are included in the scope or gist of the invention and are included in the invention set out in the patent claims and the scope of equivalents thereof.

The invention could of course also be applied to bus rapid transit (BRT), which is a transportation system in which rapid transit is realized using buses rather than tracks. Bus rapid transit (BRT) modes may include example a mode in which mass transportation is achieved by regular operation in an urban zone by providing a permanent dedicated running space (dedicated bus lanes or dedicated roads or overpasses).

## Claims

**1.** Transportation management apparatus comprising:

a transportation management means that performs service management of a plurality of trains constituting a train group, based on a preset train diagram and a preset total power consumption amount, following said preset train diagram, in such a way that an actual total power consumption amount accompanying operation of a plurality of trains is kept within said preset total power consumption amount.

**2.** The transportation management apparatus according to claim 1,
wherein said transportation management means performs said service management in such a way as to control a running speed or acceleration/deceleration of said trains in question in accordance with positional information during operation of said trains, so that an actual total energy consumption amount accompanying operation of said plurality of trains is kept within said preset total power consumption amount.

**3.** The transportation management apparatus according to claim 1 or claim 2,
wherein said transportation management means performs said service management in such a way that actual arrival times or departure times of said trains are kept within arrival times or departure times specified by said preset train diagram.

**4.** The transportation management apparatus according to any of claim 1 to claim 3,
wherein said transportation management means further comprises a power demand/supply planning means that creates a power demand/supply plan, based on said preset total power consumption amount and said preset train diagram.

**5.** The transportation management apparatus according to claim 4,
further comprising a power demand/supply control means that controls power supply apparatus constituting a power supply system in accordance with said power demand/supply plan.

**6.** The transportation management apparatus according to any of claim 1 to claim 5,
further comprising a service management means that controls said running speed or acceleration/deceleration of trains in question in accordance with positional information during operation of said trains, in accordance with said service management.

**7.** A transportation management system comprising:

a transportation management apparatus that gives service management instructions for a plurality of trains constituting a train group, based on a preset train diagram and a preset total power consumption amount, following said preset train diagram, in such a way that an actual total power consumption amount accompanying operation of plurality of trains is kept within said preset total power consumption amount; and
a service management apparatus that controls a running speed or acceleration/deceleration of trains in question, based on service management instructions and positional information during operation of said trains.

**8.** The transportation management system according to claim 7,
wherein said transportation management apparatus comprises:

a power demand/supply planning means that creates a power demand/supply plan based on said preset train diagram and said preset total power consumption amount; and

a power demand/supply control means that controls power supply apparatus constituting said power supply system, following said power demand/supply plan.

**9.** A transportation management system comprising:

a transportation management apparatus that gives service management instructions for a plurality of trains constituting a train group, based on a preset train diagram and a preset total power consumption amount, following said preset train diagram, in such a way that an actual total power consumption amount accompanying operation of plurality of trains is kept within said preset total power consumption amount, and that controls a running speed or acceleration/deceleration of trains in question, based on said service management instructions and positional information during operation of said trains; and
a power management apparatus that creates a power demand/supply plan based on said preset operating timetable and said preset total power consumption amount, and controls power supply apparatus constituting a power supply system following said power demand/supply plan.

**10.** A control program that controls a transportation management apparatus that performs service management of a plurality of trains constituting a train group, by means of a computer, **characterized in that** said control program makes said computer function as:

means for acquiring a preset total power consumption amount and a preset train diagram; and
a transportation management means that performs service management of plurality of trains constituting said train group in such a way that an actual total power consumption amount accompanying operation of said plurality of trains is kept within said preset total power consumption amount, while following said train diagram, based on said preset total power consumption amount and said preset train diagram.

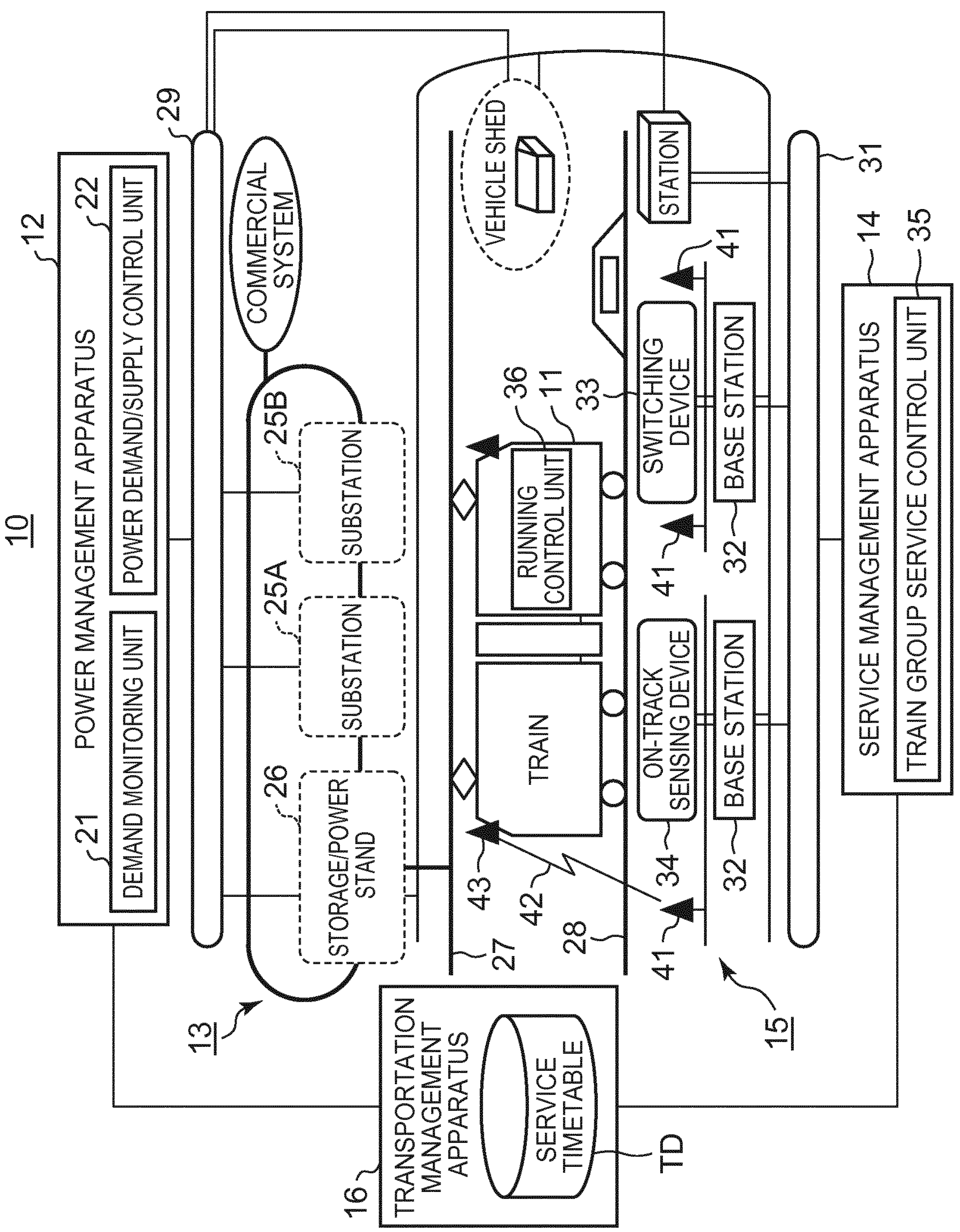
10
POWER MANAGEMENT APPARATUS
12
DEMAND MONITORING UNIT
21
POWER DEMAND/SUPPLY CONTROL UNIT
22
29
COMMERCIAL SYSTEM
25B
SUBSTATION
25A
SUBSTATION
26
STORAGE/POWER STAND
13
VEHICLE SHED
STATION
RUNNING CONTROL UNIT
36
11
33
TRAIN
SWITCHING DEVICE
ON-TRACK SENSING DEVICE
BASE STATION
BASE STATION
41
41
41
32
32
34
43
42
27
28
15
31
14
35
SERVICE MANAGEMENT APPARATUS
TRAIN GROUP SERVICE CONTROL UNIT
16
TRANSPORTATION MANAGEMENT APPARATUS
SERVICE TIMETABLE
TD

FIG. 1

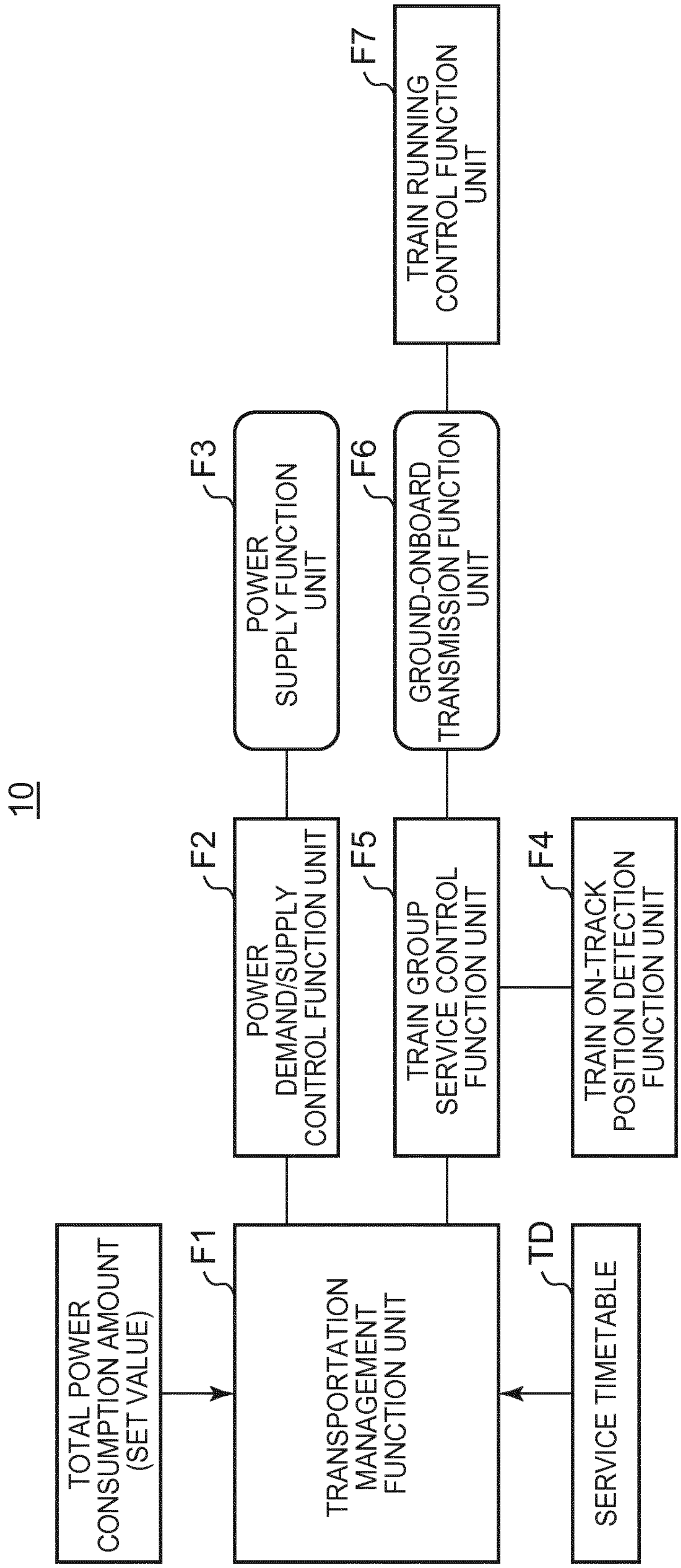
10
TOTAL POWER CONSUMPTION AMOUNT (SET VALUE)
F1
TRANSPORTATION MANAGEMENT FUNCTION UNIT
TD
SERVICE TIMETABLE
F2
POWER DEMAND/SUPPLY CONTROL FUNCTION UNIT
F3
POWER SUPPLY FUNCTION UNIT
F5
TRAIN GROUP SERVICE CONTROL FUNCTION UNIT
F4
TRAIN ON-TRACK POSITION DETECTION FUNCTION UNIT
F6
GROUND-ONBOARD TRANSMISSION FUNCTION UNIT
F7
TRAIN RUNNING CONTROL FUNCTION UNIT

FIG. 2

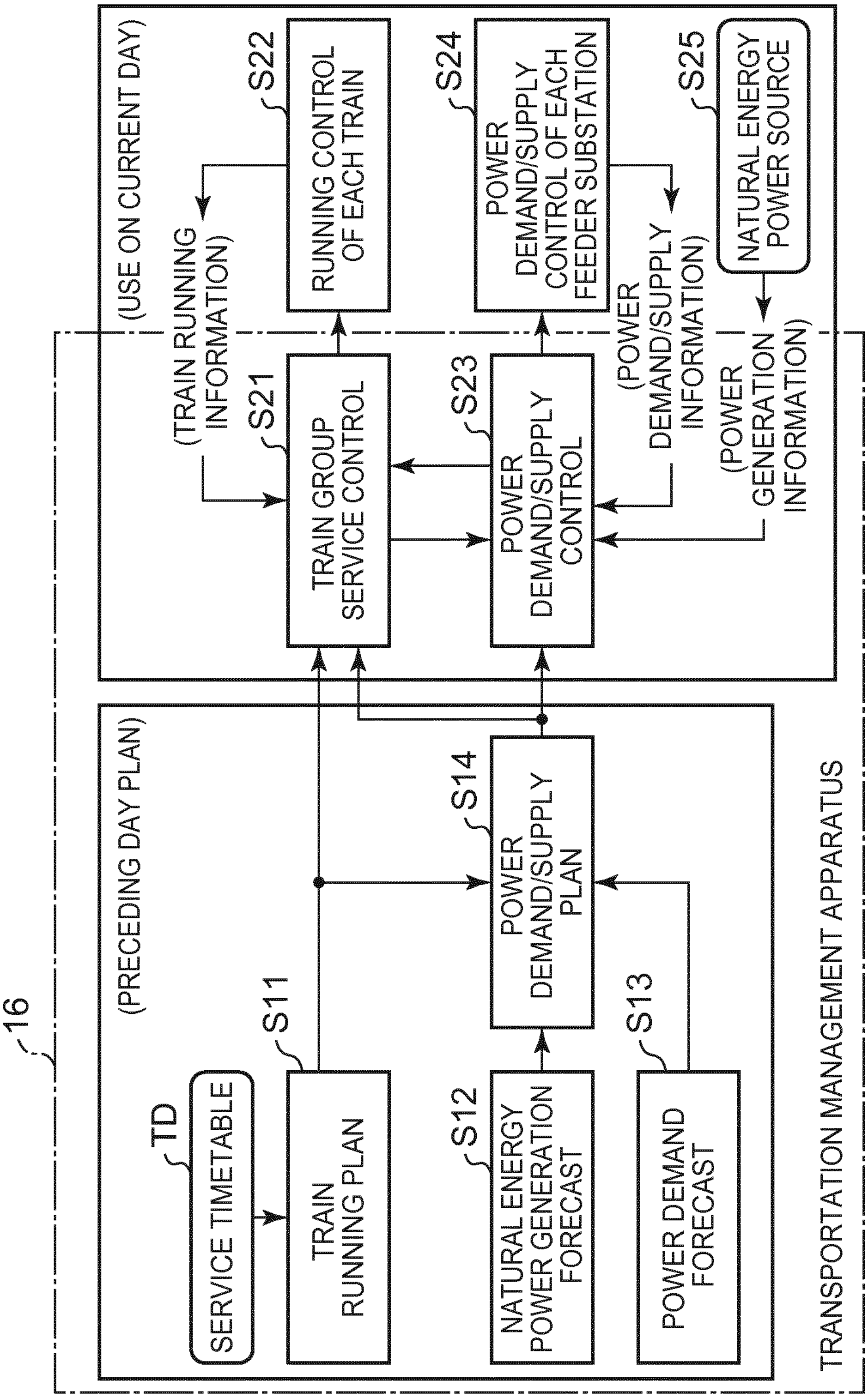
16
(PRECEDING DAY PLAN)
TD
SERVICE TIMETABLE
S11
TRAIN RUNNING PLAN
S12
NATURAL ENERGY POWER GENERATION FORECAST
S13
POWER DEMAND FORECAST
S14
POWER DEMAND/SUPPLY PLAN
(USE ON CURRENT DAY)
S21
TRAIN GROUP SERVICE CONTROL
S22
RUNNING CONTROL OF EACH TRAIN
(TRAIN RUNNING INFORMATION)
S23
POWER DEMAND/SUPPLY CONTROL
S24
POWER DEMAND/SUPPLY CONTROL OF EACH FEEDER SUBSTATION
(POWER DEMAND/SUPPLY INFORMATION)
S25
NATURAL ENERGY POWER SOURCE
(POWER GENERATION INFORMATION)
TRANSPORTATION MANAGEMENT APPARATUS

FIG. 3

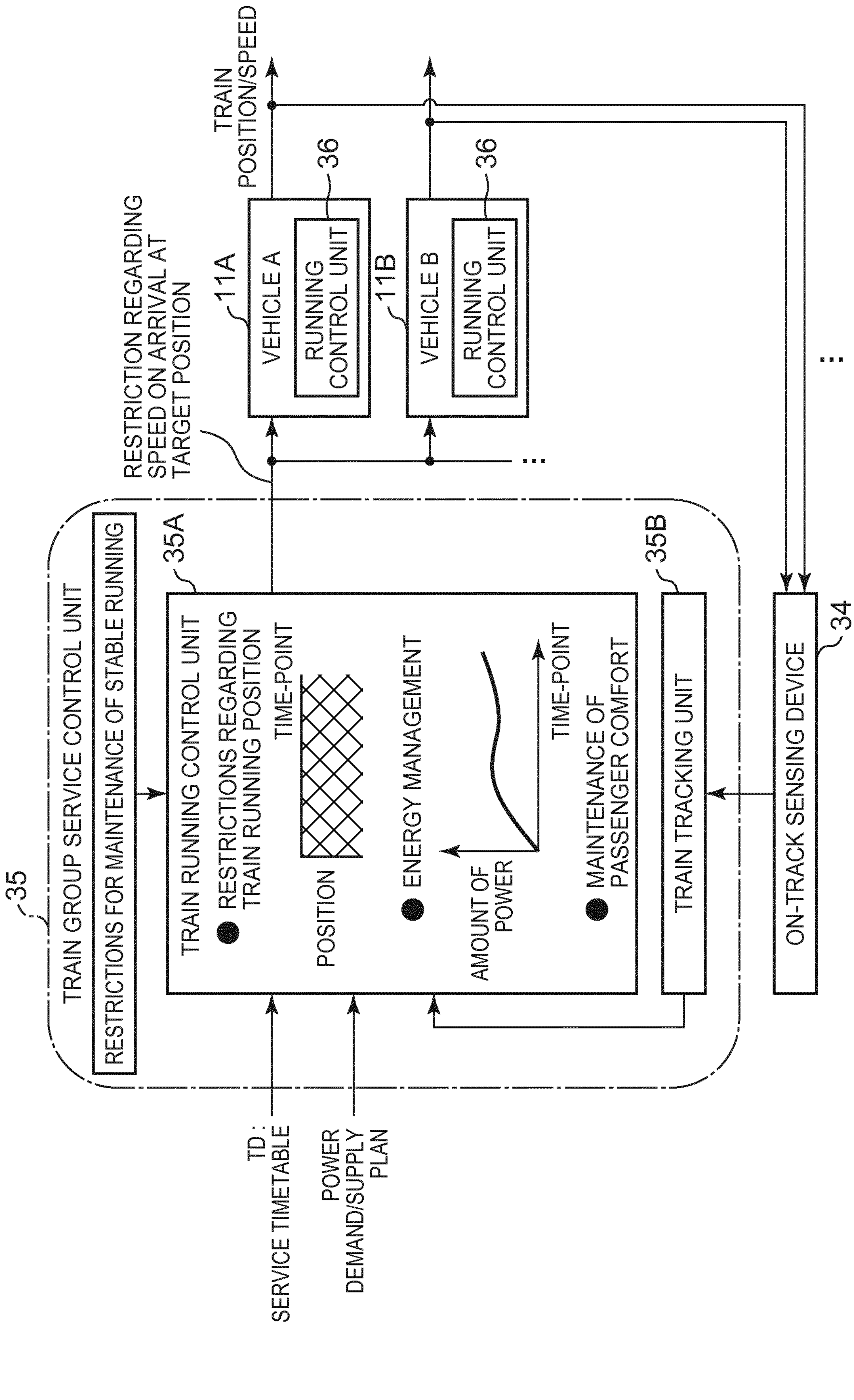
35
TRAIN GROUP SERVICE CONTROL UNIT
RESTRICTIONS FOR MAINTENANCE OF STABLE RUNNING
35A
TRAIN RUNNING CONTROL UNIT
RESTRICTIONS REGARDING TRAIN RUNNING POSITION
TIME-POINT
POSITION
ENERGY MANAGEMENT
AMOUNT OF POWER
TIME-POINT
MAINTENANCE OF PASSENGER COMFORT
35B
TRAIN TRACKING UNIT
ON-TRACK SENSING DEVICE
34
TD : SERVICE TIMETABLE
POWER DEMAND/SUPPLY PLAN
RESTRICTION REGARDING SPEED ON ARRIVAL AT TARGET POSITION
11A
VEHICLE A
RUNNING CONTROL UNIT
36
11B
VEHICLE B
RUNNING CONTROL UNIT
36
TRAIN POSITION/SPEED
...
...

FIG. 4

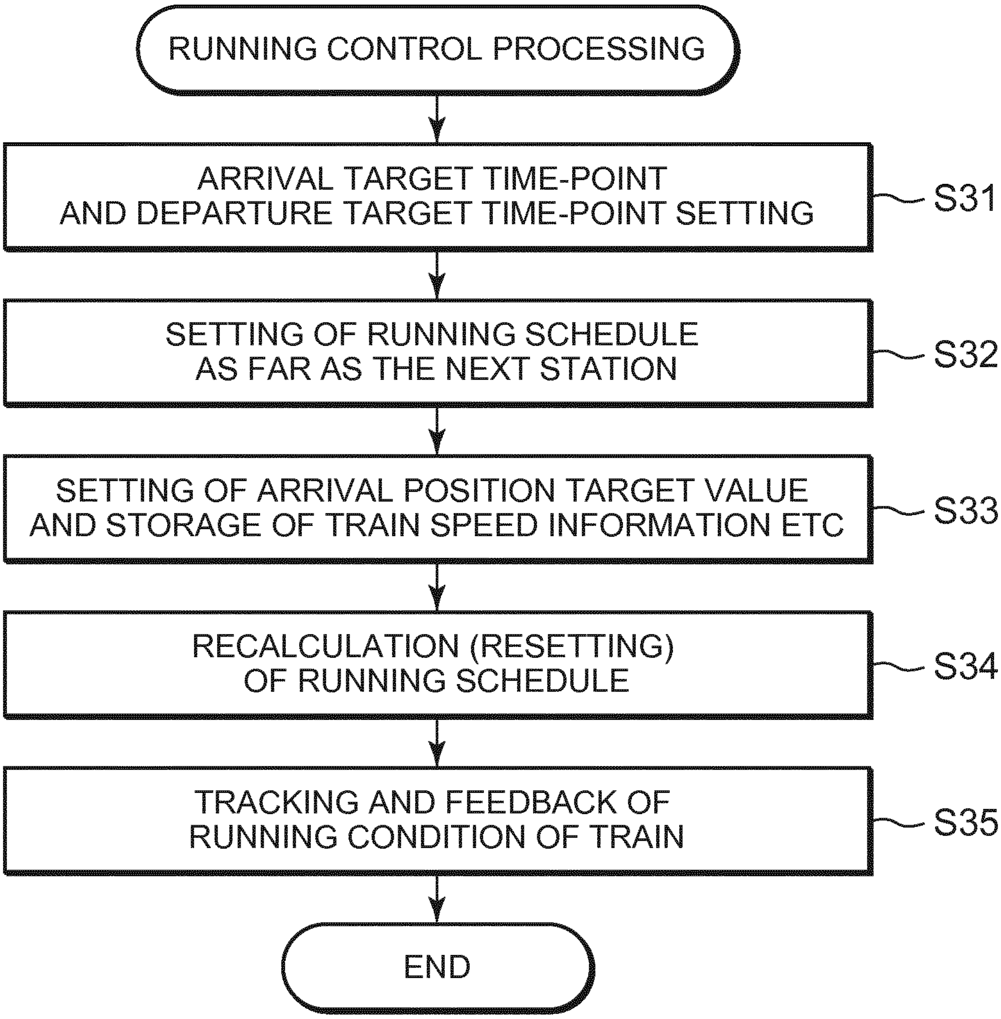
RUNNING CONTROL PROCESSING
ARRIVAL TARGET TIME-POINT AND DEPARTURE TARGET TIME-POINT SETTING
S31
SETTING OF RUNNING SCHEDULE AS FAR AS THE NEXT STATION
S32
SETTING OF ARRIVAL POSITION TARGET VALUE AND STORAGE OF TRAIN SPEED INFORMATION ETC
S33
RECALCULATION (RESETTING) OF RUNNING SCHEDULE
S34
TRACKING AND FEEDBACK OF RUNNING CONDITION OF TRAIN
S35
END

FIG. 5

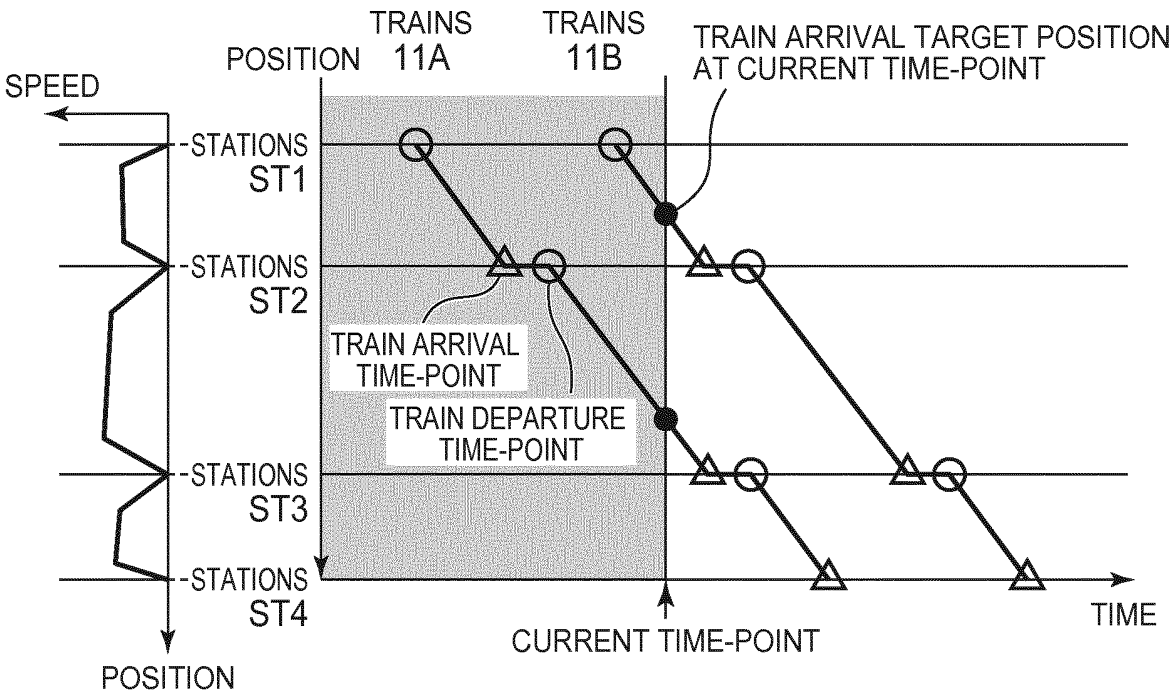
SPEED
POSITION
TRAINS 11A
TRAINS 11B
TRAIN ARRIVAL TARGET POSITION AT CURRENT TIME-POINT
STATIONS ST1
STATIONS ST2
STATIONS ST3
STATIONS ST4
TRAIN ARRIVAL TIME-POINT
TRAIN DEPARTURE TIME-POINT
CURRENT TIME-POINT
TIME
POSITION

FIG. 6

FIG. 7A

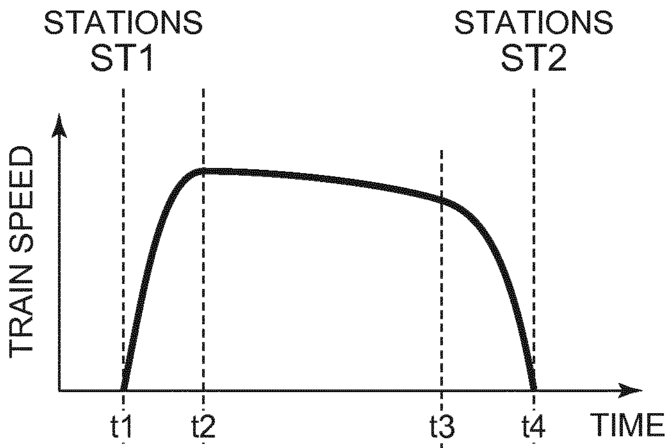
STATIONS
ST1
STATIONS
ST2
TRAIN SPEED
t1
t2
t3
t4
TIME

FIG. 7B

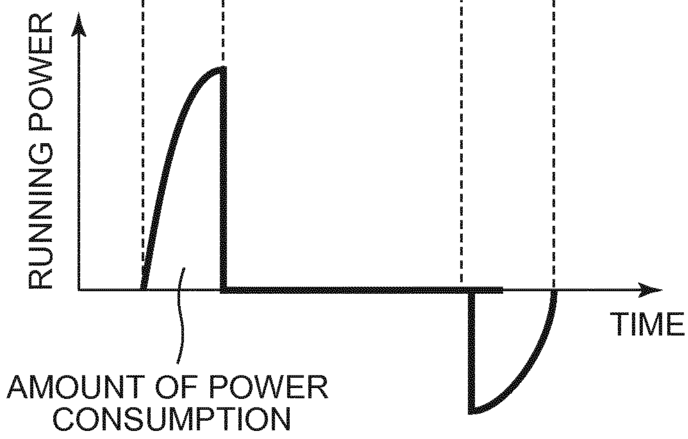
RUNNING POWER
TIME
AMOUNT OF POWER
CONSUMPTION

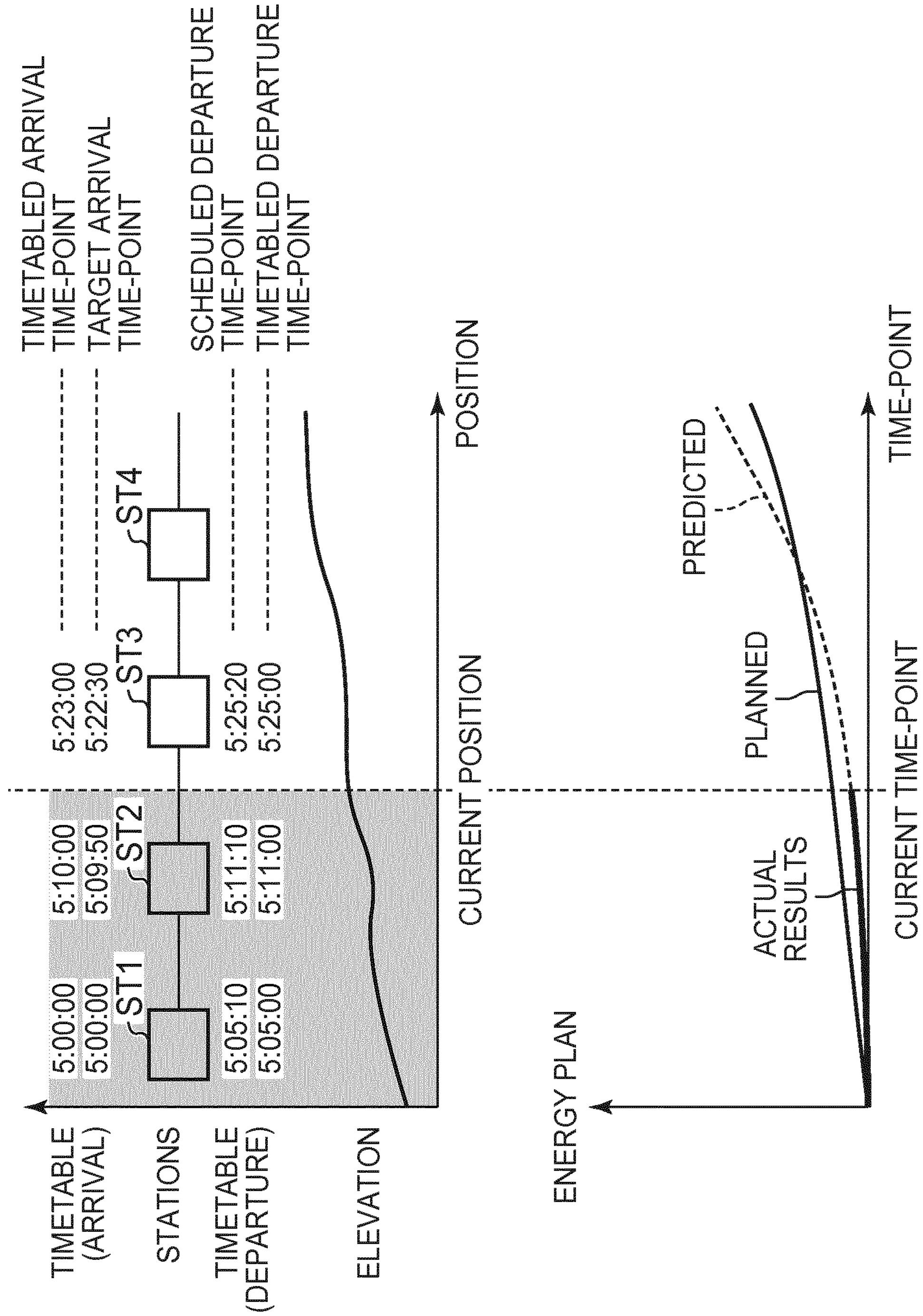
TIMETABLE (ARRIVAL)
STATIONS
TIMETABLE (DEPARTURE)
ELEVATION
5:00:00
5:00:00
5:05:10
5:05:00
ST1
5:10:00
5:09:50
5:11:10
5:11:00
ST2
5:23:00
5:22:30
5:25:20
5:25:00
ST3
ST4
TIMETABLED ARRIVAL TIME-POINT
TARGET ARRIVAL TIME-POINT
SCHEDULED DEPARTURE TIME-POINT
TIMETABLED DEPARTURE TIME-POINT
CURRENT POSITION
POSITION
ENERGY PLAN
ACTUAL RESULTS
PLANNED
PREDICTED
CURRENT TIME-POINT
TIME-POINT

FIG. 8

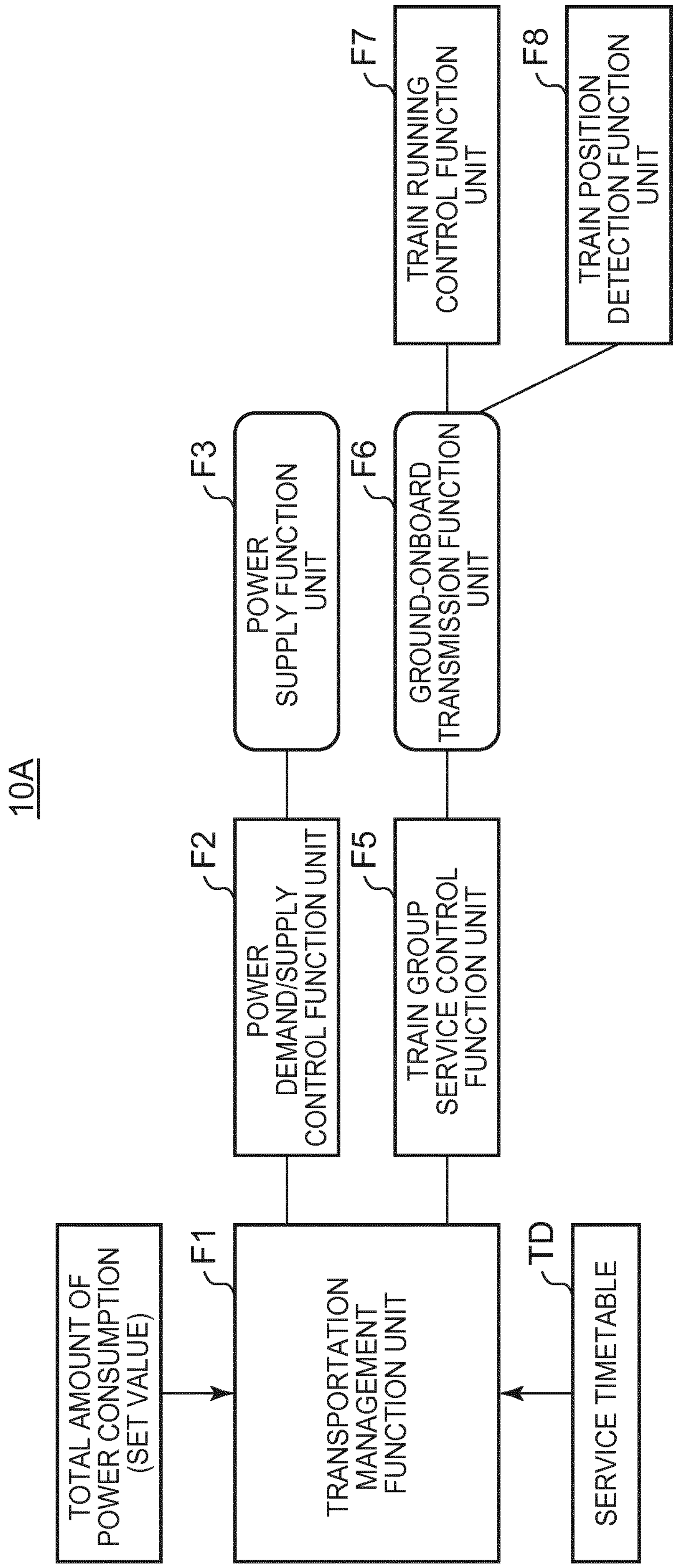
10A
TOTAL AMOUNT OF POWER CONSUMPTION (SET VALUE)
F1
TRANSPORTATION MANAGEMENT FUNCTION UNIT
TD
SERVICE TIMETABLE
F2
POWER DEMAND/SUPPLY CONTROL FUNCTION UNIT
F3
POWER SUPPLY FUNCTION UNIT
F5
TRAIN GROUP SERVICE CONTROL FUNCTION UNIT
F6
GROUND-ONBOARD TRANSMISSION FUNCTION UNIT
F7
TRAIN RUNNING CONTROL FUNCTION UNIT
F8
TRAIN POSITION DETECTION FUNCTION UNIT

FIG. 9

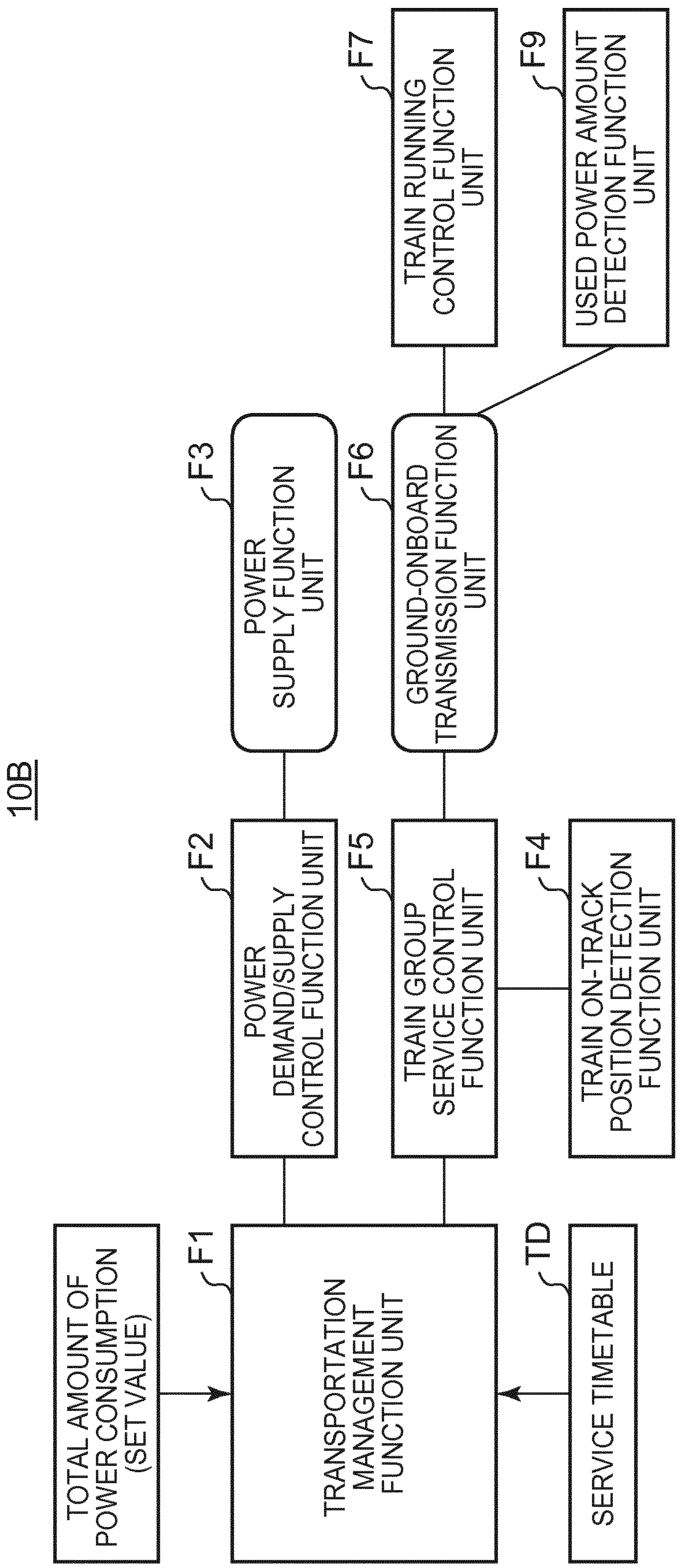
10B
TOTAL AMOUNT OF POWER CONSUMPTION (SET VALUE)
F1
TRANSPORTATION MANAGEMENT FUNCTION UNIT
TD
SERVICE TIMETABLE
F2
POWER DEMAND/SUPPLY CONTROL FUNCTION UNIT
F5
TRAIN GROUP SERVICE CONTROL FUNCTION UNIT
F4
TRAIN ON-TRACK POSITION DETECTION FUNCTION UNIT
F3
POWER SUPPLY FUNCTION UNIT
F6
GROUND-ONBOARD TRANSMISSION FUNCTION UNIT
F7
TRAIN RUNNING CONTROL FUNCTION UNIT
F9
USED POWER AMOUNT DETECTION FUNCTION UNIT

FIG. 10

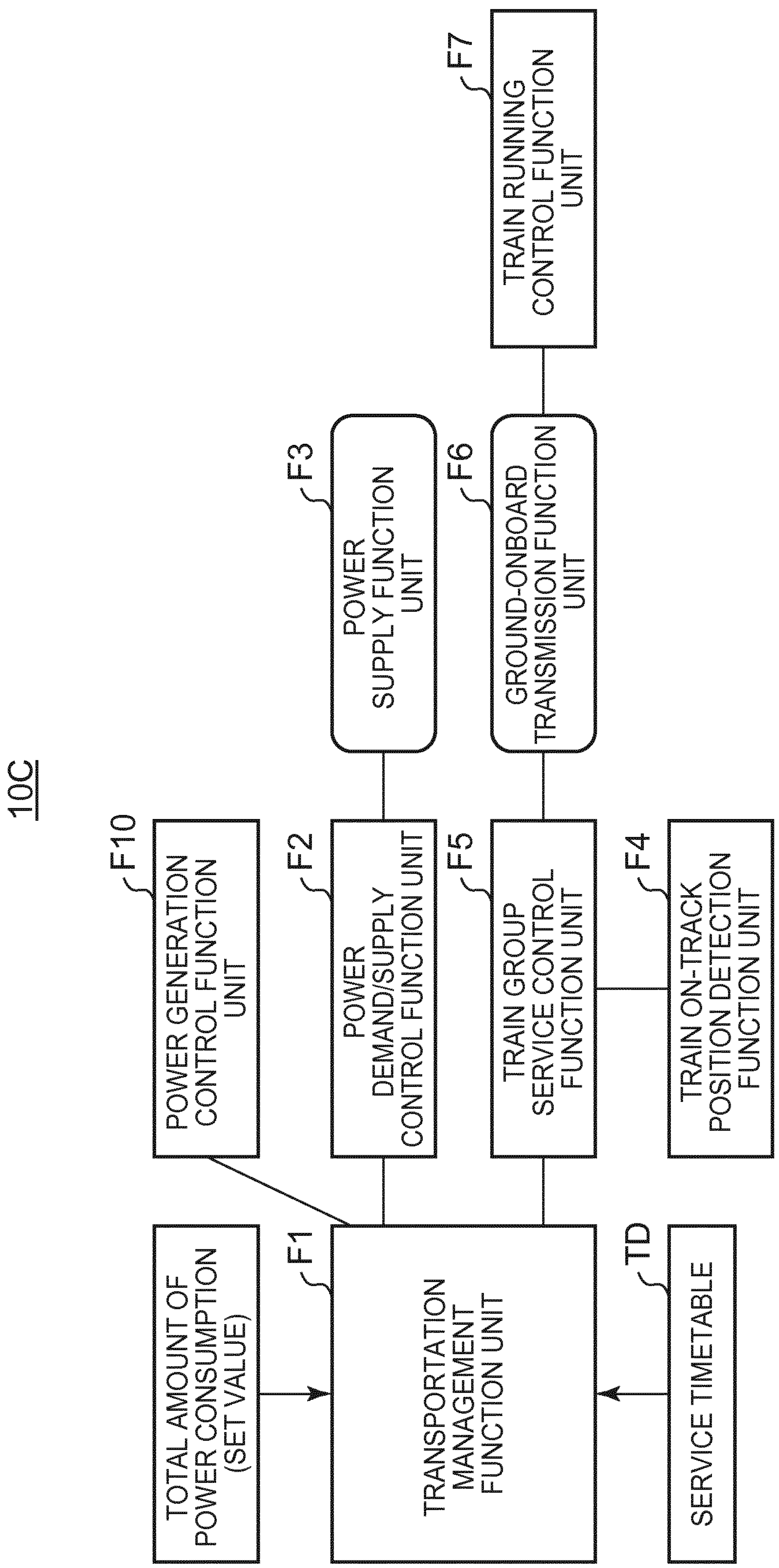
10C
TOTAL AMOUNT OF POWER CONSUMPTION (SET VALUE)
F1
TRANSPORTATION MANAGEMENT FUNCTION UNIT
TD
SERVICE TIMETABLE
F10
POWER GENERATION CONTROL FUNCTION UNIT
F2
POWER DEMAND/SUPPLY CONTROL FUNCTION UNIT
F5
TRAIN GROUP SERVICE CONTROL FUNCTION UNIT
F4
TRAIN ON-TRACK POSITION DETECTION FUNCTION UNIT
F3
POWER SUPPLY FUNCTION UNIT
F6
GROUND-ONBOARD TRANSMISSION FUNCTION UNIT
F7
TRAIN RUNNING CONTROL FUNCTION UNIT

FIG. 11

**INTERNATIONAL SEARCH REPORT**

International application No.
PCT/JP2012/008163

A. CLASSIFICATION OF SUBJECT MATTER
*B61L27/00*(2006.01)i, *B60L11/18*(2006.01)i, *B60L15/20*(2006.01)i, *B60M3/00* (2006.01)i

According to International Patent Classification (IPC) or to both national classification and IPC

B. FIELDS SEARCHED

Minimum documentation searched (classification system followed by classification symbols)
B61L27/00, B60L11/18, B60L15/20, B60M3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 5-24539 A (Hitachi, Ltd.), 02 February 1993 (02.02.1993), page 3, column 4, line 11 to page 5, column 8, line 40; fig. 1 to 11 & US 5346163 A | 1-3,6-7,10<br>4-5,8-9 |
| X<br>A | JP 2000-198443 A (The Nippon Signal Co., Ltd.), 18 July 2000 (18.07.2000), paragraphs [0022] to [0030]; fig. 2 to 5 (Family: none) | 1-2,4-10<br>3 |
| A | JP 2010-89639 A (The Nippon Signal Co., Ltd.), 22 April 2010 (22.04.2010), entire text; all drawings (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 April, 2013 (02.04.13) | 16 April, 2013 (16.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/008163

C (Continuation). DOCUMENTS CONSIDERED TO BE RELEVANT

| Category* | Citation of document, with indication, where appropriate, of the relevant passages | Relevant to claim No. |
|---|---|---|
| A | JP 53-136216 A (Hitachi, Ltd.), 28 November 1978 (28.11.1978), entire text; all drawings (Family: none) | 1-10 |
| A | JP 6-321114 A (Mitsubishi Electric Corp.), 22 November 1994 (22.11.1994), entire text; all drawings (Family: none) | 1-10 |
| A | JP 9-76911 A (Central Japan Railway Co.), 25 March 1997 (25.03.1997), entire text; all drawings (Family: none) | 1-10 |
| A | JP 2011-31803 A (Kawasaki Heavy Industries, Ltd.), 17 February 2011 (17.02.2011), entire text; all drawings (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3607045 B
- JP 2010011711 A
- US 7397149 B